# EUROPÄISCHE PATENTSCHRIFT

(11) **EP 2 650 586 B1**
(45) Veröffentlichungstag und Bekanntmachung des Hinweises auf die Patenterteilung: **25.02.2015**
(21) Anmeldenummer: 12163773.0
(22) Anmeldetag: 11.04.2012
(51) Int. Cl.: F17C 5/00, F17C 9/00, F17C 13/08, F15B 1/08

(54) **Druckspeicher mit einer Verbindungsvorrichtung**
Pressure storage assembly with a connection device
Accumulateur de pression avec dispositif de liaison

(43) Veröffentlichungstag der Anmeldung: 16.10.2013
(73) Patentinhaber: Magna Steyr Fahrzeugtechnik AG & Co KG, 8041 Graz (AT)
(72) Erfinder: Mayr, Franz, 8323 St. Marein bei Graz (AT); Schmidt, Carsten, 8413 Allerheiligen b.W. (AT); Schärfl, Alexander, 8010 Graz (AT)
(74) Vertreter: Rausch, Gabriele

(56) Entgegenhaltungen:
- EP-A2- 1 336 794
- WO-A1-03/006309
- WO-A2-2007/144919
- DE-A1- 19 812 904
- US-A- 2 310 021
- US-A- 4 800 923
- US-A1- 2003 146 214
- US-A1- 2006 283 519

## Beschreibung

Die vorliegende Erfindung betrifft einen Druckspeicher mit einer Verbindungsvorrichtung, wobei der Druckspeicher und die Verbindungsvorrichtung fluidleitend miteinander verbindbar sind.

Derartige Druckspeicher dienen der Aufnahme von druckbeaufschlagten Fluiden. Insbesondere werden Druckspeicher als Kraftstofftanks für Fahrzeuge eingesetzt und beinhalten dann Gase, wie zum Beispiel CNG, Mischgase oder Wasserstoff oder Flüssigkeiten, wie LPG oder LNG bei hohen Drücken. Die Druckspeicher werden meist als zylindrische Flaschen hergestellt. Es ist auch bekannt mehrere Druckspeicher in einem Modul zusammen zu fassen. Dadurch kann ein gemeinsamer Zugang zu mehreren Druckbehältern bereitgestellt werden. Die Anbindung der Druckspeicher an Verbindungsvorrichtungen erfolgt üblicherweise über Schraubverbindungen.

Eine Kraftstoffbehälteranordnung zum Speichern druckbeaufschlagter Gase für ein Kraftfahrzeug mit mehreren einzelnen Kraftstoffbehältern mit jeweils einer endseitigen Öffnung zur Be- und Entleerung des Behälters, die des weiteren einen Sammler und ein Halteteil aufweist, wobei die Kraftstoffbehälter einerseits mit ihren Öffnungen an den Sammler und andererseits mechanischer an das Halteteil angeschlossen sind und somit die einzelnen Kraftstoffbehälter durch den Sammler und das Halteteil zu einer Einheit zusammen gehalten sind, ist aus der DE 20 2006 004 434 U 1 bekannt.

Weiters ist aus der DE 102 06 502 C1 ein Druckgastanksystem bekannt, mit mindestens zwei im Wesentlichen gleichartigen Gasbehältern, wobei die Gasbehälter ein Bodenteil und ein Entnahmeteil und den Entnahmeteilen zugeordnete Öffnungen aufweisen. Den Entnahmeteilen ist ein Absperrventil zugeordnet, wobei die Entnahmeteile mit ihren Öffnungen in eine die Entnahmeteile miteinander verbindende Verbindungsschiene hineinragen. Die Öffnungen stehen mit einem in der Verbindungsschiene verlaufenden Gaskanal in Verbindung, wobei der Verbindungsschiene ein Absperrventil an einem Gaskanalausgang zugeordnet ist und dieses das allen Gasbehältern gemeinsame Absperrventil bildet.

Aus der DE 198 12 904 A1 ist schließlich eine Vorrichtung zum Speichern von Druckgas bekannt, mit einer Vielzahl von Speicherbehältern, wobei jeder Speicherbehälter ein Kopfstück aufweist, und die jeweiligen Kopfstücke modulartig miteinander verbunden oder verbindbar sind. Die Leitung des Druckgases aus den Speicherbehältern erfolgt über einen in den Kopfstücken vorgesehenen Strömungskanal, der über eine Bohrung mit dem Hohlraum der jeweiligen Speicherbehälter kommuniziert. Die Verbindung der einzelnen Kopfstücke erfolgt über Verbindungselemente, die in entsprechende Öffnungen in den Kopfstücken eingeführt werden.

Weitere Verbindungen zwischen Druckspeichern und Verbindungsvorrichtungen sind aus WO 2007/144919 A2, EP 1 336 794 A2, US 2003/146214 A1, US 4 800 923 A und US 2 310 021 A bekannt.

Es ist eine Aufgabe der Erfindung, Druckspeicher mit Verbindungsvorrichtungen der genannten Art zu verbessern und insbesondere eine einfache und sichere Verbindung zwischen Druckspeicher und Verbindungsvorrichtung anzugeben.

Die Lösung der Aufgabe erfolgt durch einen Druckspeicher zur Aufnahme von druckbeaufschlagten Fluiden mit einer Verbindungsvorrichtung, wobei der Druckspeicher und die Verbindungsvorrichtung fluidleitend miteinander verbindbar sind, wobei der Druckspeicher an einem ersten Verbindungsabschnitt eine Querbohrung aufweist die eine axiale Bohrung des Druckspeichers schneidet, wobei der Druckspeicher in die Verbindungsvorrichtung einsteckbar ist, wobei die Querbohrung zur fluidleitenden Verbindung mit der Verbindungsvorrichtung eingerichtet ist.

Erfindungsgemäß ist im Druckspeicher, wie im Stand der Technik üblich, eine axiale Bohrung in einem Verbindungsabschnitt vorgesehen. Diese axiale Bohrung führt üblicherweise aus dem Druckspeicher heraus und erlaubt im Stand der Technik die Verbindung mit weiteren externen Fluidkanälen. Erfindungsgemäß wird die axiale Bohrung von einer Querbohrung geschnitten. Die Querbohrung steht bevorzugt normal auf die axiale Bohrung und ist somit parallel zur begrenzenden Wand des Druckspeichers im Verbindungsabschnitt angeordnet. Die Querbohrung kann daher einfach und zuverlässig an ebenfalls quer zu den Druckspeichern liegende Bohrungen einer Verbindungseinrichtung angeschlossen werden, insbesondere über eine Steckverbindung.

Unter dem Begriff "Bohrung" ist dabei im Rahmen der vorliegenden Schrift jede längliche Öffnung in einem umgebenden Körper zu verstehen. Das Herstellungsverfahren für die Öffnung ist hierdurch nicht festgelegt. Auβer dem Herstellen der Öffnung durch Bohren sind also auch andere Verfahren mitumfasst, beispielsweise das Verformen eines Profils.

Weiterbildungen der Erfindung sind in den abhängigen Ansprüchen, der Beschreibung sowie den beigefügten Zeichnungen angegeben. Vorzugsweise ist die Verbindungsvorrichtung zur fluidleitenden Verbindung mit einem zweiten Druckspeicher eingerichtet. Der Druckspeicher bildet daher einen Teil einer Druckspeicheranordnung die mehrere, zumindest aber zwei Druckspeicher umfasst.

Vorzugsweise sind am ersten Verbindungsabschnitt des Druckspeichers beiderseits der Querbohrung Dichtringe zur Abdichtung zwischen Druckspeicher und Verbindungsvorrichtung eingerichtet.

Besonders bevorzugt ist der erste Verbindungsabschnitt des Druckspeichers über eine Steckverbindung bzw. Klemmverbindung bzw. Schnappverbindung mit der Verbindungsvorrichtung verbunden. Hierdurch ist eine schnelle Montage und je nach Ausführung auch schnelle Demontage des Druckspeichers ermöglicht. Hierzu kann zum Beispiel auch eine freistehende Aufnahme für ein Montage- bzw. Demontagewerkzeug oder eine Bohrung für die Demontage vorgesehen sein.

Bevorzugt ist die Steckverbindung als Federelement, insbesondere als Sicherungsring, Halbmond-Sicherungsring, Bolzen oder Schraube im Verbindungsabschnitt ausgebildet, die in einer Nut der Verbindungsvorrichtung zu liegen kommt.

Weiters ist bevorzugt ein axialer Bewegungsfreiraum für die Steckverbindung, insbesondere für das Federelement ausgebildet, insbesondere ein Bewegungsraum in einer Nut der Verbindungsvorrichtung. Dadurch wird der Steckverbindung bei Längenänderungen des Druckspeichers ein definiertes Spiel in der Nut ermöglicht.

Bevorzugt ist die Verbindungsvorrichtung in einem Fahrzeug montiert und dient der Lagerung der Druckspeicher. Die Verbindungsvorrichtung stellt also eine stabilen Rahmen dar, der in einem Fahrzeug vormontiert wird. In diesen Rahmen werden die einzelnen Druckspeicher eingesteckt, die sich entsprechend des vorgegebenen Bewegungsspielraumes im Rahmen bewegen können.

Nach einer Ausgestaltung der Erfindung ist der erste Verbindungsabschnitt des Druckspeichers über eine Schraubverbindung mit der Verbindungsvorrichtung verbunden. Insbesondere dienen hierzu eine Schraube eine Schraubenmutter und/oder ein Splint.

Vorzugsweise ist in der axialen Bohrung des Druckspeichers eine Druckspeicherkomponente, insbesondere ein Ventil, angeordnet.

Besonders bevorzugt weist die Verbindungsvorrichtung im Bereich der axialen Bohrung des Druckspeichers eine Öffnung auf. Hierdurch ist insbesondere eine in der axialen Bohrung angeordnete Druckspeicherkomponente von außen gut zugänglich.

Besonders bevorzugt ist weiters die Öffnung mit einer Abdeckung abdeckbar, wobei die Abdeckung insbesondere als Indikator für den Dichtheitszustand des Druckspeichers ausgebildet sein kann. Die Abdeckung verhindert das Eindringen von Verschmutzungen in die Öffnung. Weiters kann die Abdeckung so ausgeführt sein, dass eine zerstörungsfreie Demontage des Druckspeichers nicht ermöglicht wird und/oder ein unbefugter Zugriff ersichtlich ist. Weiters kann die Abdeckung so ausgeführt sein, dass bei einem Dichtungsschaden die Abdeckung beispielsweise nach außen gewölbt wird oder reißt und so der Dichtungsschaden rechtzeitig erkannt werden kann.

Gemäß einer Ausgestaltung der Erfindung weist der Druckspeicher im ersten Verbindungsabschnitt eine Sollbruchstelle auf, wobei insbesondere im Druckspeicher auch ein Durchflussbegrenzer angeordnet ist und die Sollbruchstelle zum Durchflussbegrenzer so angeordnet ist, dass der Durchflussbegrenzer bei Bruch an der Sollbruchstelle im Druckspeicher verbleibt.

Besonders bevorzugt weist der Druckspeicher einen zweiten Verbindungsabschnitt auf, der zur fluidleitenden Verbindung mit der Verbindungsvorrichtung eingerichtet ist, wobei der zweite Verbindungsabschnitt insbesondere gleich aufgebaut ist, wie der erste Verbindungsabschnitt. Der Druckspeicher ist so an zwei Abschnitten, insbesondere an beiden Enden eines zylindrischen Druckspeichers über eine erfindungsgemäße Verbindung mit der Verbindungsvorrichtung verbindbar.

Besonders bevorzugt bilden mindestens zwei erfindungsgemäß mit einer Verbindungsvorrichtung verbundene Druckspeicher eine Druckspeicheranordnung, wobei die mindestens zwei Druckspeicher über die Verbindungsvorrichtung miteinander fluidleitend verbunden sind, wobei die mindestens zwei Druckspeicher jeweils an einem ersten und an einem zweiten Verbindungsabschnitt mit der Verbindungsvorrichtung fluidleitend verbunden sind. Die Druckspeicher sind an mindestens zwei Anschlusspunkten, beispielsweise an gegenüberliegenden Enden zylindrischer Druckspeicher über die Verbindungsvorrichtung miteinander verbunden. Hierdurch werden verschiedenste Ausbildungen von Fluidströmungen innerhalb der Anordnung ermöglicht, insbesondere auch Kreisläufe, da gleichzeitig ein Zufluss von Fluid in einen Druckspeicher und ein Abfluss innerhalb der Druckspeicheranordnung stattfinden kann. Die Druckspeicher kommunizieren über einen getrennten zweiten Kanal, beispielsweise während deren Befüllung und während der Entnahme des Fluids. Unter anderem wird hierdurch auch ein vereinfachter Spülvorgang ermöglicht.

Ein Spülvorgang ist beispielsweise notwendig, wenn bei einer Endprüfung der Dichtheit der Gesamtanlage ein Prüffluid verwendet wird, welches nicht dem Medium entspricht, das in der eigentlichen Anwendung der Druckspeicher gespeichert wird, oder wenn aus Sicherheitsgründen für den Transport der Drucktankanordnung von einer Befüllung, mit beispielsweise Wasserstoff, Abstand genommen wird. Für Wasserstoff-Speicheranlagen werden üblicherweise Helium oder Stickstoff als Prüffluid verwendet, die aber im Einsatz im Fahrzeug eine Schädigung der Antriebseinheit verursachen können. Durch die genannte Verbindungsanordnung, die freie Kommunikation aller Komponenten und die Möglichkeit strömungsbeeinflussende Elemente, wie Querschnittreduktionen zu verbauen, kann bei der Inbetriebnahme im Fahrzeug ein Spülvorgang dargestellt werden, der Zeit, Energie und Ressourcen spart. Dies wird beispielsweise erreicht indem über eine Befüllventileinheit das endgültig zu speichernde Fluid eingebracht wird, während an einer Entnahmeventileinheit gezielt das Prüffluid abgelassen oder abgesaugt wird. Wenn mit der dem Gesamtvolumen der Anlage entsprechenden Menge gespült wurde, ist durch die gezielte Durchströmung aller Komponenten eine hohe Reinheit der Anlage erreicht. Ein großer Vorteil liegt darin, dass dies schon mit geringstem Druck erreicht wird. Es ist somit kein Befüllen mit Prüffluid unter Hochdruck, mit zeitaufwendigen Ablassen und zeitweiliger Wiederholung des Vorganges notwendig.

Vorzugsweise sind die ersten Verbindungsabschnitte der Druckspeicher mit einem ersten Verbindungselement der Verbindungsvorrichtung verbunden und die zweiten Verbindungsabschnitte der Druckspeicher mit einem zweiten Verbindungselement der Verbindungsvorrichtung verbunden, wobei das erste Verbindungselement und das zweite Verbindungselement ausschließlich über die Druckspeicher fluidleitend miteinander verbunden sind.

In dieser Anordnung wird die Verbindungsvorrichtung durch zwei voneinander getrennte Verbindungselemente gebildet, wobei das eine Verbindungselement die beiden ersten Abschnitte oder Enden der Druckspeicher miteinander verbindet und das zweite Verbindungselement die beiden zweiten Abschnitte oder Enden der Druckspeicher miteinander verbindet.

Weiters bevorzugt ist die Verbindungsvorrichtung mechanisch stabil ausgebildet. Wenn die Verbindungsvorrichtung aus Verbindungselementen zusammengesetzt ist, wie oben beschrieben, so sind bevorzugt die einzelnen Verbindungselemente mechanisch stabil ausgeführt. Auf diese Weise stellt die Verbindungsvorrichtung bzw. die Verbindungselemente einen stabilen Rahmen dar, der zur Aufnahme von Druckspeichern dient.

Insbesondere können die Verbindungselemente zusammen mit länglich geformten Druckspeichern, beispielsweise zylindrischen Druckspeichern, einen mechanisch stabilen Rahmen bilden, wobei die zwei einander gegenüberliegenden Enden der Druckspeicher jeweils fluidleitend mit dem jeweiligen Verbindungselement verbunden sind.

Weiters sind bevorzugt Befestigungspunkte für die Befestigung der Druckspeicheranordnung, insbesondere in einem Kraftfahrzeug, ausschließlich an der Verbindungsvorrichtung ausgebildet. Die Montage der gesamten Druckspeicheranordnung erfolgt dementsprechend über die Verbindungsvorrichtung. An den Befestigungspunkten, beispielsweise Aufhängungs- bzw. Monatgeaufnahmen der Verbindungsvorrichtung, können elastische Elemente, wie Gummilager, integriert sein. Durch diese ist eine Aufnahme von Längenänderungen und Lageänderungen der Druckspeicher gewährleistet. Dabei erfolgen Längenänderungen der Druckspeicher aufgrund des gleichzeitigen Druckaufbaus bzw. -abbaus durch die kommunizierenden Kanäle über die Verbindungsabschnitte und die Verbindungsvorrichtung in der Regel gleichmäßig, sodass die notwendigen Elastizitäten hierfür reduziert sind.

Gemäß einer weiteren bevorzugten Ausgestaltung der Erfindung sind Ventile und/oder Ventilblöcke und/oder Filter und/oder Absperrelemente und/oder Druckminderer und/oder Querschnittreduktionen, insbesondere eine Befüllventileinheit und/oder eine Entnahmeventileinheit, in oder an der Verbindungsvorrichtung angeordnet. Komponenten die der Beeinflussung der Fluidströmung dienen sind so in der Verbindungsvorrichtung angeordnet und können flexibel über die Verbindungsvorrichtung verteilt werden.

Gemäß einer Ausgestaltung der Erfindung sind die Druckspeicher untrennbar mit der Verbindungsvorrichtung verbunden, so dass eine Trennung eines Druckspeichers von der Verbindungsvorrichtung nur bei Zerstörung einer Versiegelung und/oder mit einem Spezialwerkzeug möglich ist. Hierdurch kann auch nachträglich sicher festgestellt werden, ob durch den Endkunden versucht wurde, die Verbindung zwischen einem Druckspeicher und der Verbindungsvorrichtung zu lösen. Ein Hantieren an der Verbindung soll hierdurch Fachpersonal bzw. Fachwerkstätten vorbehalten werden

Gemäß einer Ausgestaltung der Erfindung sind die Druckspeicher über eine feste Schraubverbindung, insbesondere mittels einer Hohlschraube, mit der Verbindungsvorrichtung verbunden.

Die Erfindung wird im Folgenden beispielhaft unter Bezugnahme auf die Zeichnungen beschrieben.
- Fig. 1a: ist eine schematische Darstellung einer Druckspeicheranordnung von vorne.
- Fig. 1b: ist eine schematische Darstellung einer Druckspeicheranordnung von oben.
- Fig. 2a: ist eine schematische Darstellung einer weiteren Druckspeicheranordnung von vorne.
- Fig. 2b: ist eine schematische Darstellung einer weiteren Druckspeicheranordnung von oben.
- Fig. 3 bis Fig. 7: sind schematische Darstellungen verschiedener Ausbildungen der Verbindung zwischen Druckspeicher und Verbindungsvorrichtung von vorne.
- Fig. 8: ist eine schematische Darstellung einer Ausbildung einer Verbindung zwischen Druckspeicher und Verbindungsvorrichtung von oben.
- Fig. 9: ist eine schematische Darstellung einer weiteren Ausbildung einer Verbindung zwischen Druckspeicher und Verbindungsvorrichtung von oben.

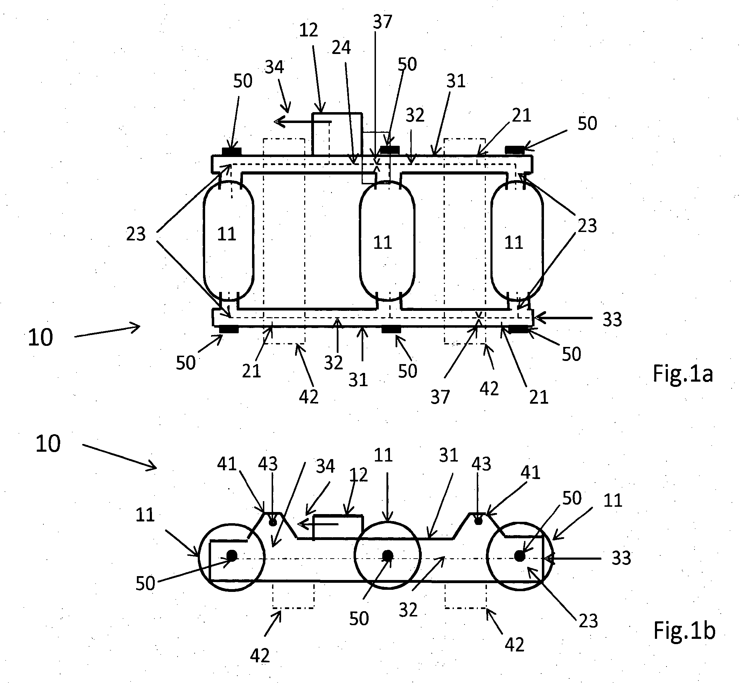

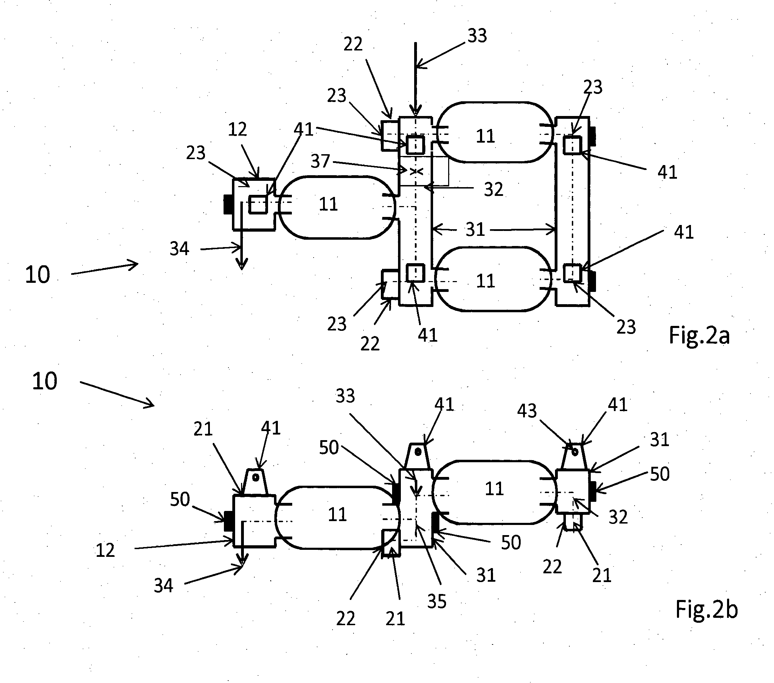

In den Fig. 1a bis 2b sind schematische Darstellungen verschiedener Druckspeicheranordnungen dargestellt.

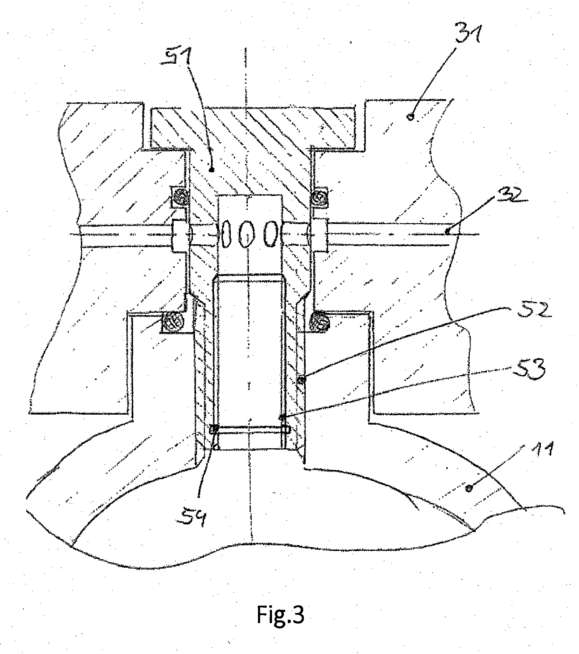

Die Druckspeicheranordnung 10 umfasst zylindrische Druckspeicher 11, die an ihren beiden Enden mit Verbindungselementen einer Verbindungsvorrichtung 31 dauerhaft verbunden sind. Das druckbeaufschlagte Fluid strömt aus den Druckspeichern 11 durch Bohrungen 32 der Verbindungselemente. Die Verbindungsvorrichtung 31 ist mechanisch stabil ausgebildet und an Befestigungspunkten 41,42 hängend oder stehend, beispielsweise in einem Fahrzeug, befestigt. Die Druckspeicher 11 sind über Schraubverbindungen 50 mit der Verbindungsvorrichtung 31 verbunden. In bzw. an der Verbindungsvorrichtung 31 ist ein temperaturgesteuerter Druckminderer 21, ein automatisches Zylinderventil 23 und ein Wartungsventil 24 integriert, ebenso wie Ventilblöcke 12 und 22. Die Montage von Ventilen, Ventilblöcken und dergleichen kann an beliebiger Stelle in bzw. an der Verbindungsvorrichtung 31 erfolgen. Weiters sind in der Verbindungsvorrichtung 31 Querschnittreduktionen 37 angeordnet. Durch die beliebige Anordnung der genannten Komponenten in der Verbindungsvorrichtung und die freie Kommunikation der Druckspeicher 11 über die Verbindungsvorrichtung 31 ist eine gezielte Lenkung des Strömungskreislaufs im Gesamtsystem möglich. Vor allem durch die beliebige Anordnung der Befüllventileinheit 33 und der Entnahmeventileinheit 34 in der Druckspeicheranordnung 10 ist somit ein einfaches Spülen der Gesamtanlage bei der Inbetriebnahme ermöglicht. Eine mechanisch feste Verbindung zwischen den Druckspeichern 11 und der Verbindungsvorrichtung 31 erfolgt beispielsweise mittels Schraubverbindung 50 und ist in Fig. 3 näher dargestellt.

Fig. 3 ist eine schematische Darstellung einer nicht erfindungsgemäßen Verbindung zwischen Druckspeichern 11 und Verbindungsvorrichtung 31. Zur Verbindung wird eine Hohlschraube 51 verwendet, die über ein Außengewinde 52 am Druckspeicher 11 befestigt ist. Das Innengewinde 53 der Hohlschraube 51 dient der Aufnahme von zylindernahen Ventilen und/oder Filtern. Es sind aber auch andere Befestigungsarten möglich. So können die zylindernahen Ventile und / oder Filter beispielsweise über Einstiche 54 der Hohlschraube 51 mittels Sicherungsring fixiert werden.

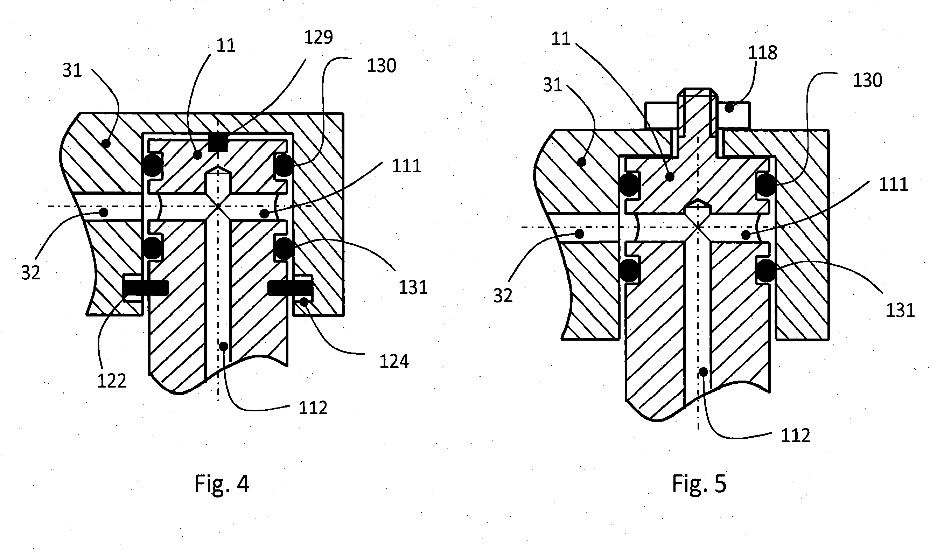

Die Fig. 4 bis Fig. 7 sind schematische Darstellungen von Ausbildungen der erfindungsgemäßen Verbindung zwischen Druckspeicher und Verbindungsvorrichtung von vorne.

In Fig. 4 ist die Verbindung zwischen dem Druckspeicher 11 bzw. einem Verbindungsabschnitt des Druckspeichers 11 und der Verbindungsvorrichtung 31 bzw. einem Anschlussblock der Verbindungsvorrichtung 31 als Klemmverbindung bzw. Steckverbindung ausgeführt. Die Klemmung erfolgt mittels eines Klemmverbindungselementes 122 welches als Halbmond-Sicherungsring ausgeführt ist und welches in einer Nut der Verbindungsvorrichtung 31 festgelegt ist. Dabei weist die Nut in axialer Richtung einen Bewegungsfreiraum 124 für den Sicherungsring auf. Im Verbindungsabschnitt des Druckspeichers 11 führt eine axiale Bohrung 112 aus dem Innenraum des Druckspeichers 11 in Richtung einer äußeren Begrenzung des Verbindungsabschnittes des Druckspeichers 11. Diese axiale Bohrung 112 wird von einer Querbohrung 111 geschnitten, so dass ein Fluidstrom von der axialen Bohrung 112 über die Querbohrung 111 weitergeführt werden kann. Die Querbohrung 111 reicht bis ans Ende des Verbindungsabschnittes des Druckspeichers 11, so dass über die Querbohrung 111 eine Verbindung zwischen dem Innenraum des Druckspeichers 11 und der Umgebung des Druckspeichers 11 hergestellt ist und so Fluid über die Querbohrung 111 in den Druckspeicher 11 gelangen kann und aus diesem austreten kann. Die Querbohrung 111 ist so ausgerichtet, dass sie in die Bohrung 32 der Verbindungsvorrichtung einmündet. Diese Ausrichtung der Bohrungen 111 und 32 zueinander wird besonders durch die Steckverbindung, im Gegensatz insbesondere zu Schraubverbindungen, erleichtert. Weiters wird über die Zentrierung 129, beispielsweise einen Zentrierbolzen, die radiale Ausrichtung des Druckspeichers 11 sichergestellt. Beiderseits der Querbohrung 111 sind zwischen dem Verbindungsabschnitt des Druckspeichers 11 und dem Anschlussblock der Verbindungsvorrichtung 31 Dichtringe 130 bzw. 131 angeordnet.

In der Ausführung gemäß Fig. 5 ist die Verbindung zwischen dem Druckspeicher 11 und der Verbindungsvorrichtung 31 über eine Mutter 118 gesichert.

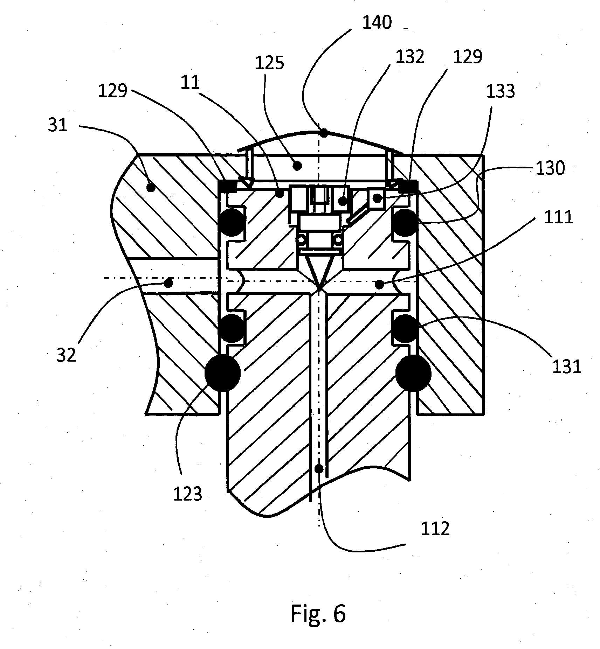

In der Ausführung gemäß Fig. 6 ist die Verbindung zwischen dem Druckspeicher 11 und der Verbindungsvorrichtung 31 über ein Schraubverbindungselement 123 hergestellt, jedoch könnte die Verbindung auch als Steckverbindung ausgeführt sein. Die Verbindung verwendet ebenfalls Zentrierungen 129. In dieser Ausführungsform ist die axiale Bohrung 112 durchgehend, als durchgängige Öffnung, ausgeführt. Weiters weist auch die Verbindungsvorrichtung 31 im Bereich des offenen Endes der axialen Bohrung 112 eine Öffnung 125 auf, sodass Komponenten wie zum Beispiel ein manuelles Ventil in die Öffnung eingeschraubt oder eingesteckt werden können. In der Öffnung der axialen Bohrung 112 befindet sich eine Schraube 132, die in planer Stellung zum Druckspeicher 11 die Öffnung nach außen abdichtet und die Bohrungen 111, 112 freigibt, bzw. in voll eingeschraubtem Zustand die axiale Bohrung 112 gegen die Querbohrung 111 abdichtet. In einem definierten Zustand der Schraube 132 gibt diese eine zusätzliche Öffnung 133 nach außen frei. Die zusätzliche Öffnung 133 ist so ausgebildet, dass zum Beispiel eine Serviceleitung eingeschraubt werden kann. Die Öffnung 125 ist über eine Abdeckung 140 aus Kunststoff oder Blech abdeckbar, die so ausgeführt ist, dass sie bei einem Schaden der Dichtung, insbesondere des Dichtringes 130, nach außen gewölbt wird oder reißt. Die Abdeckung 140 ist ferner so ausgeführt, dass eine zerstörungsfreie Demontage nicht möglich ist und somit ein unbefugter Zugriff verhindert wird oder ersichtlich ist.

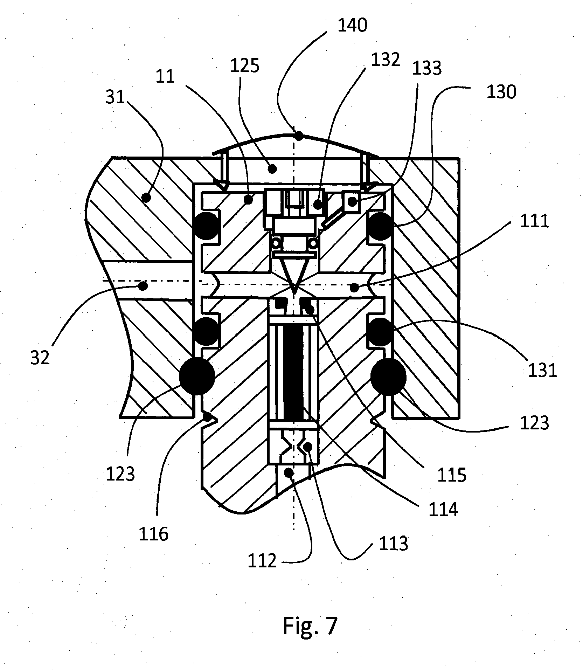

In der Ausführung gem. Fig. 7 weist der Verbindungsabschnitt des Druckspeichers 11 zusätzlich eine Sollbruchstelle 116 und einen Durchflussbegrenzer 113 auf, die so angeordnet sind, dass der Durchflussbegrenzer 113 bei Bruch an der Sollbruchstelle 116 im Druckspeicher 11 verbleibt. Die axiale Bohrung 112 ist so ausgeführt, dass ein Durchflussbegrenzer 113 und/oder ein Filter 114 und/oder ein Dichtsitz 115 eingeschraubt oder eingesteckt werden kann.

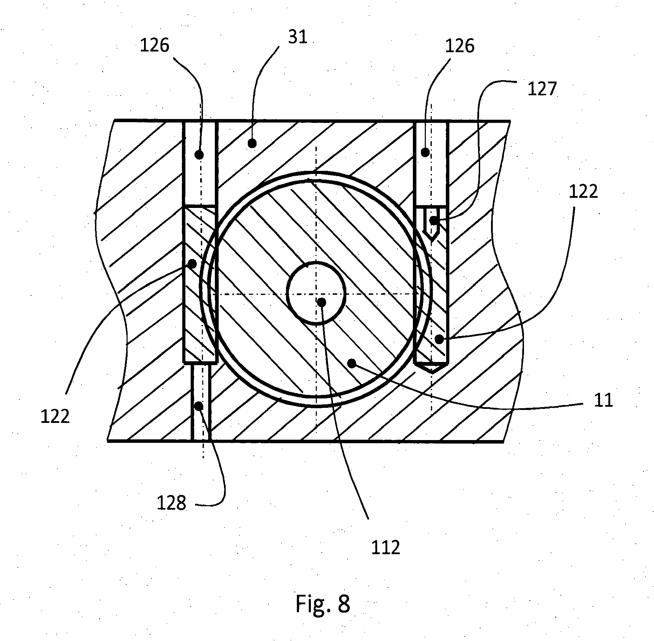

Fig. 8 zeigt eine schematische Darstellung einer Ausbildung der Verbindung zwischen Druckspeicher und Verbindungsvorrichtung von oben. Dabei sind als Klemmverbindungselemente 122 Bolzen in zur Nut des Druckspeichers 11 überschneidenden Bohrungen 126 angeordnet. Die Ausführung ist so angelegt, dass mittels der freistehenden Aufnahme 127 für das Montage- bzw. Demontagewerkzeug und die Bohrung 128 eine Schnellmontage bzw. Schnelldemontage ermöglicht wird.

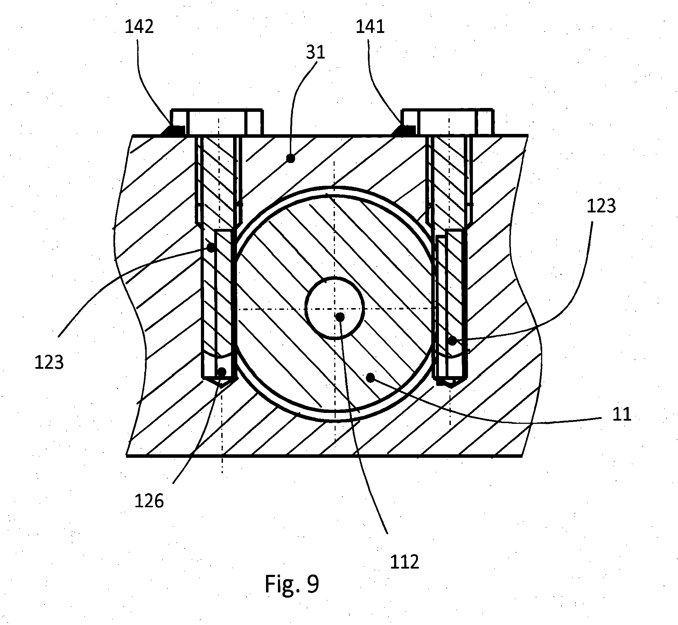

Fig. 9 zeigt eine schematische Darstellung einer weiteren Ausbildung der Verbindung zwischen Druckspeicher 11 und Verbindungsvorrichtung 31 von oben. Hierbei werden als Schraubverbindungselemente 123 Schrauben eingesetzt, deren Gewinde nur entlang eines Teiles der Schraubenlänge ausgeführt ist. Das vordere Teil der Verbindungselemente 123, welches den Halt des Druckspeichers 11 an der Verbindungsvorrichtung 31 sicher stellt, ist als gewindefreier Bolzen ausgeführt. Dadurch ist bei entsprechender Dimensionierung der Nut ein Bewegungsfreiraum für das Verbindungselement 123 sicher gestellt und so ein Spiel für die in der Verbindungsvorrichtung 31 gelagerten Druckspeicher 11 ermöglicht. An den Schraubverbindungselementen 123 sind Versiegelungen 141, 142 ersichtlich. Diese Versiegelungen können beispielsweise durch Lack oder Schweißpunkte bereitgestellt werden.

Die Erfindung offenbart somit eine einfache und sichere Verbindung zwischen einem oder mehreren Druckspeichern und einer Verbindungsvorrichtung.

### Bezugszeichenliste

- 10: Druckspeicheranordnung
- 11: Druckspeicher
- 12: Ventilblock
- 21: Druckminderer
- 22: Ventilblock
- 23: Zylinderventil
- 24: Wartungsventil
- 31: Verbindungsvorrichtung
- 32: Bohrung
- 33: Befüllventileinheit
- 34: Entnahmeventileinheit
- 37: Querschnittreduktionen
- 41: Befestigungspunkt hängende Ausführung
- 42: Befestigungspunkt stehende Ausführung
- 43: Gummilager
- 50: Schraubverbindung
- 51: Hohlschraube
- 52: Außengewinde
- 53: Innengewinde
- 54: Inneneinstich

- 111: Querbohrung
- 112: axiale Bohrung
- 113: Durchflussbegrenzer
- 114: Filter
- 115: Dichtsitz
- 116: Sollbruchstelle
- 118: Mutter
- 122: Klemmverbindungselement
- 123: Schraubverbindungselement
- 124: Bewegungsfreiraum
- 125: Öffnung
- 126: Bohrung
- 127: freistehende Aufnahme
- 128: Bohrung
- 129: Zentrierung
- 130: Dichtring
- 131: Dichtring
- 132: Schraube
- 133: Öffnung
- 140: Abdeckung
- 141: Versiegelung
- 142: Versiegelung

## Patentansprüche

1. Druckspeicher zur Aufnahme von druckbeaufschlagten Fluiden mit einer Verbindungsvorrichtung, wobei der Druckspeicher (11) und die Verbindungsvorrichtung (31) fluidleitend miteinander verbindbar sind, wobei
, der Druckspeicher (11) an einem ersten Verbindungsabschnitt eine Querbohrung (111) aufweist, die eine axiale Bohrung (112) des Druckspeichers (11) schneidet, **dadurch gekennzeichnet dass** der Druckspeicher mit einem ersten Verbindungsabschnitt in die Verbindungsvorrichtung einsteckbar ist, wobei die Querbohrung (111) zur fluidleitenden Verbindung mit der Verbindungsvorrichtung (31) eingerichtet ist.

2. Druckspeicher mit einer Verbindungsvorrichtung nach Anspruch 1, **dadurch gekennzeichnet, dass** die Verbindungsvorrichtung (31) zur fluidleitenden Verbindung mit einem zweiten Druckspeicher (11) eingerichtet ist.

3. Druckspeicher mit einer Verbindungsvorrichtung nach einem der vorhergehenden Ansprüche,
**dadurch gekennzeichnet, dass** am ersten Verbindungsabschnitt des Druckspeichers (11) beiderseits der Querbohrung (111) Dichtringe (130, 131) zur Abdichtung zwischen Druckspeicher (11) und Verbindungsvorrichtung (31) eingerichtet sind.

4. Druckspeicher mit einer Verbindungsvorrichtung nach einem der vorhergehenden Ansprüche,
**dadurch gekennzeichnet, dass** der erste Verbindungsabschnitt des Druckspeichers (11) über eine Steckverbindung bzw. Klemmverbindung (122) mit der Verbindungsvorrichtung (31) verbunden ist.

5. Druckspeicher mit einer Verbindungsvorrichtung nach Anspruch 4, **dadurch gekennzeichnet, dass** die Steckverbindung bzw. Klemmverbindung (122) als Federelement, insbesondere als Sicherungsring, Halbmond-Sicherungsring, Bolzen oder Schraube im Verbindungsabschnitt ausgebildet ist, der in einer Nut der Verbindungsvorrichtung (31) zu liegen kommt.

6. Druckspeicher mit einer Verbindungsvorrichtung nach Anspruch 5, **dadurch gekennzeichnet, dass** in der Nut ein axialer Bewegungsfreiraum (124) für das Federelement ausgebildet ist.

7. Druckspeicher mit einer Verbindungsvorrichtung nach einem der vorhergehenden Ansprüche,
**dadurch gekennzeichnet, dass** der erste Verbindungsabschnitt des Druckspeichers (11) über eine Schraubverbindung mit der Verbindungsvorrichtung verbunden ist.

8. Druckspeicher mit einer Verbindungsvorrichtung nach einem der vorhergehenden Ansprüche,
**dadurch gekennzeichnet, dass** in der axialen Bohrung (112) des Druckspeichers (11) eine Druckspeicherkomponente, insbesondere ein Ventil, angeordnet ist.

9. Druckspeicher mit einer Verbindungsvorrichtung nach einem der vorhergehenden Ansprüche,
**dadurch gekennzeichnet, dass** die Verbindungsvorrichtung (3 1) im Bereich der axialen Bohrung (112) des Druckspeichers (11) eine Öffnung (125) aufweist.

10. Druckspeicher mit einer Verbindungsvorrichtung nach Anspruch 9, **dadurch gekennzeichnet, dass** die Öffnung (125) mit einer Abdeckung (140) abdeckbar ist, wobei die Abdeckung (140) insbesondere als Indikator für den Dichtheitszustand des Druckspeichers (11) ausgebildet ist.

11. Druckspeicher mit einer Verbindungsvorrichtung nach einem der vorhergehenden Ansprüche,
**dadurch gekennzeichnet, dass** der Druckspeicher (11) im ersten Verbindungsabschnitt eine Sollbruchstelle (116) aufweist, wobei insbesondere im Druckspeicher (11) auch ein Durchflussbegrenzer (113) angeordnet ist und die Sollbruchstelle (116) zum Durchflussbegrenzer (113) so angeordnet ist, dass der Durchflussbegrenzer (113) bei Bruch an der Sollbruchstelle (116) im Druckspeicher (11) verbleibt.

12. Druckspeicher mit einer Verbindungsvorrichtung nach einem der vorhergehenden Ansprüche,
**dadurch gekennzeichnet, dass** der Druckspeicher (11) einen zweiten Verbindungsabschnitt aufweist, der zur fluidleitenden Verbindung mit der Verbindungsvorrichtung (31) eingerichtet ist, wobei der zweite Verbindungsabschnitt insbesondere gleich aufgebaut ist, wie der erste Verbindungsabschnitt.

13. Druckspeicher mit einer Verbindungsvorrichtung nach Anspruch 2 und Anspruch 12, wobei die mindestens zwei Druckspeicher (11) und die Verbindungsvorrichtung (31) eine Druckspeicheranordnung bilden, wobei die mindestens zwei Druckspeicher (11) über die Verbindungsvorrichtung (31) jeweils am ersten und am zweiten Verbindungsabschnitt mit der Verbindungsvorrichtung (31) fluidleitend verbunden sind.

14. Druckspeicher mit einer Verbindungsvorrichtung nach Anspruch 13,
**dadurch gekennzeichnet, dass** die ersten Verbindungsabschnitte der Druckspeicher (11) mit einem ersten Verbindungselement der Verbindungsvorrichtung (31) verbunden sind und die zweiten Verbindungsabschnitte der Druckspeicher (11) mit einem zweiten Verbindungselement der Verbindungsvorrichtung (31) verbunden sind, wobei das erste Verbindungselement und das zweite Verbindungselement ausschließlich über die Druckspeicher (11) fluidleitend miteinander verbunden sind.

15. Druckspeicher mit einer Verbindungsvorrichtung nach Anspruch 14,
**dadurch gekennzeichnet, dass** die Verbindungselemente zusammen mit länglich geformten Druckspeichern (11) einen mechanisch stabilen Rahmen bilden, wobei die zwei einander gegenüberliegenden Enden der Druckspeicher (11) jeweils fluidleitend mit dem jeweiligen Verbindungselement verbunden sind.

16. Druckspeicher mit einer Verbindungsvorrichtung nach Anspruch 13,
**dadurch gekennzeichnet, dass** Befestigungspunkte (41, 42) für die Befestigung der Druckspeicheranordnung, insbesondere in einem Kraftfahrzeug, ausschließlich an der Verbindungsvorrichtung (31) ausgebildet sind.

17. Druckspeicher mit einer Verbindungsvorrichtung nach Anspruch 13,
**dadurch gekennzeichnet, dass** Ventile (23, 24) und/oder Ventilblöcke (12, 22) und/oder Filter und/oder Absperrelemente und/oder Druckminderer (21) und/oder Querschnittreduktionen (37), insbesondere eine Befüllventileinheit (33) und/oder eine Entnahmeventileinheit (34), in oder an der Verbindungsvorrichtung (31) angeordnet sind.

18. Druckspeicher mit einer Verbindungsvorrichtung nach einem der vorhergehenden Ansprüche,
**dadurch gekennzeichnet, dass** die Druckspeicher (11) untrennbar mit der Verbindungsvorrichtung (31) verbunden sind, so dass eine Trennung eines Druckspeichers (11) von der Verbindungsvorrichtung (31) nur bei Zerstörung einer Versiegelung und/oder mit einem Spezialwerkzeug möglich ist.

19. Druckspeicher mit einer Verbindungsvorrichtung nach einem der vorhergehenden Ansprüche,
**dadurch gekennzeichnet, dass** die Verbindungsvorrichtung (31) in einem Fahrzeug montiert ist und zur Lagerung der Druckspeicher (11) ausgebildet ist.

## Claims

1. Pressure accumulator for receiving pressurized fluids with a connection device, wherein the pressure accumulator (11) and the connection device (31) can be connected together fluid-conductively, wherein the pressure accumulator (11) at a first connection segment has a transverse bore (111) which intersects an axial bore (112) of the pressure accumulator (11), **characterized in that** the pressure accumulator can be inserted with a first connection segment into the connection device, wherein the transverse bore (111) is adapted for fluid-conductive connection with the connection device (31).

2. Pressure accumulator with a connection device according to Claim 1, **characterised in that** the connection device (31) is adapted for fluid-conductive connection with a second pressure accumulator (11).

3. Pressure accumulator with a connection device according to any of the preceding claims, **characterised in that** on the first connection segment of the pressure accumulator (11), on both sides of the transverse bore (111) are arranged sealing rings (130, 131) for sealing between the pressure accumulator (11) and the connection device (31) .

4. Pressure accumulator with a connection device according to any of the preceding claims, **characterised in that** the first connection segment of the pressure accumulator (11) is connected with the connection device (31) via push-fit connection or clamp connection (122).

5. Pressure accumulator with a connection device according to Claim 4, **characterised in that** the push-fit connection or clamp connection (122) is formed as a spring element, in particular a locking ring, crescent-shaped locking ring, bolt or screw in the connection segment, which comes to lie in a groove of the connection device (31).

6. Pressure accumulator with a connection device according to Claim 5, **characterised in that** an axial movement space (124) for the spring element is formed in the groove.

7. Pressure accumulator with a connection device according to any of the preceding claims, **characterised in that** the first connection segment of the pressure accumulator (11) is connected with the connection device via a screw connection.

8. Pressure accumulator with a connection device according to any of the preceding claims, **characterised in that** a pressure accumulator component, in particular a valve, is arranged in the axial bore (112) of the pressure accumulator (11).

9. Pressure accumulator with a connection device according to any of the preceding claims, **characterised in that** the connection device (31) has an opening (125) in the region of the axial bore (112) of the pressure accumulator (11).

10. Pressure accumulator with a connection device according to Claim 9, **characterised in that** the opening (125) can be covered with a cover (140), wherein the cover (140) is formed in particular as an indicator for the state of seal of the pressure accumulator (11) .

11. Pressure accumulator with a connection device according to any of the preceding claims, **characterised in that** the pressure accumulator (11) has a nominal break point (116) in the first connection segment, wherein in particular a flow limiter (113) is also arranged in the pressure accumulator (11) and the nominal break point (116) is arranged in relation to the flow limiter (113) such that the flow limiter (113) remains in the pressure accumulator (11) on breakage at the nominal break point (116).

12. Pressure accumulator with a connection device according to any of the preceding claims, **characterised in that** the pressure accumulator (11) has a second connection segment which is adapted for fluid-conductive connection with the connection device (31), wherein the second connection segment in particular is constructed identically to the first connection segment.

13. Pressure accumulator with a connection device according to Claim 2 and Claim 12, wherein the at least two pressure accumulators (11) and the connection device (31) form a pressure accumulator assembly, wherein the at least two pressure accumulators (11) are connected fluid-conductively with the connection device (31) via the connection device (31) at the respective first and second connection segment.

14. Pressure accumulator with a connection device according to Claim 13, **characterised in that** the first connection segments of the pressure accumulator (11) are connected with a first connection element of the connection device (31), and the second connection segments of the pressure accumulator (11) are connected with a second connection element of the connection device (31), wherein the first connection element and the second connection element are connected together fluid-conductively exclusively via the pressure accumulator (11) .

15. Pressure accumulator with a connection device according to Claim 14, **characterised in that** the connection elements together with linearly formed pressure accumulators (11) form a mechanically stable frame, wherein the two opposing ends of the pressure accumulators (11) are each connected fluid-conductively with the respective connection element.

16. Pressure accumulator with a connection device according to Claim 13, **characterised in that** fixing points (41, 42) are formed for fixing the pressure accumulator assembly, in particular in a motor vehicle, exclusively on the connection device (31) .

17. Pressure accumulator with a connection device according to Claim 13, **characterised in that** valves (23, 24) and/or valve blocks (12, 22) and/or filters and/or shut-off elements and/or pressure reducers (21) and/or cross section reductions (37), in particular a filling valve unit (33) and/or an extraction valve unit (34), are arranged in or on the connection device (31).

18. Pressure accumulator with a connection device according to any of the preceding claims, **characterised in that** the pressure accumulators (11) are connected inseparably with the connection device (31) so that separation of a pressure accumulator (11) from the connection device (31) is possible only on destruction of a seal and/or with a special tool.

19. Pressure accumulator with a connection device according to any of the preceding claims, **characterised in that** the connection device (31) is mounted in a vehicle and is adapted for mounting the pressure accumulator (11).

## Revendications

1. Accumulateur de pression destiné à contenir des fluides sous pression doté d'un dispositif de liaison, dans lequel l'accumulateur de pression (11) et le dispositif de liaison (31) peuvent être fluidiquement reliés l'un à l'autre, dans lequel l'accumulateur de pression (11) présente, à une première partie de liaison, un alésage transversal (111), qui coupe un alésage axial (112) de l'accumulateur de pression (11), **caractérisé en ce que** l'accumulateur de pression peut être engagé dans le dispositif de liaison avec une première partie de liaison, dans lequel l'alésage transversal (111) est conçu pour la liaison fluidique avec le dispositif de liaison (31).

2. Accumulateur de pression doté d'un dispositif de liaison selon la revendication 1, **caractérisé en ce que** le dispositif de liaison (31) est conçu pour la liaison fluidique avec un second accumulateur de pression (11).

3. Accumulateur de pression doté d'un dispositif de liaison selon l'une quelconque des revendications précédentes, **caractérisé en ce que** des joints toriques (130, 131) sont placés sur la première partie de liaison de l'accumulateur de pression (11), de part et d'autre de l'alésage transversal (111), pour assurer l'étanchéité entre l'accumulateur de pression (11) et le dispositif de liaison (31).

4. Accumulateur de pression doté d'un dispositif de liaison selon l'une quelconque des revendications précédentes, **caractérisé en ce que** la première partie de liaison de l'accumulateur de pression (11) est reliée au dispositif de liaison (31) par un assemblage à fiche ou un assemblage par serrage (122).

5. Accumulateur de pression doté d'un dispositif de liaison selon la revendication 4, **caractérisé en ce que** l'assemblage à fiche ou l'assemblage par serrage (122) est réalisé comme un élément à ressort, en particulier anneau d'étanchéité, anneau de sécurité demi-lune, boulon ou vis dans la partie de liaison, qui vient se placer dans une rainure du dispositif de liaison (31).

6. Accumulateur de pression doté d'un dispositif de liaison selon la revendication 5, **caractérisé en ce qu'**un espace libre de mouvement axial (124) est ménagé dans la rainure pour l'élément de ressort.

7. Accumulateur de pression doté d'un dispositif de liaison selon l'une quelconque des revendications précédentes, **caractérisé en ce que** la première partie de liaison de l'accumulateur de pression (11) est reliée au dispositif de liaison au moyen d'un assemblage à vis.

8. Accumulateur de pression doté d'un dispositif de liaison selon l'une quelconque des revendications précédentes, **caractérisé en ce qu'**un composant d'accumulateur de pression, en particulier une soupape, est disposé dans l'alésage axial (112) de l'accumulateur de pression (11).

9. Accumulateur de pression doté d'un dispositif de liaison selon l'une quelconque des revendications précédentes, **caractérisé en ce que** le dispositif de liaison (31) présente une ouverture (125) dans la région de l'alésage axial (112) de l'accumulateur de pression (11).

10. Accumulateur de pression doté d'un dispositif de liaison selon la revendication 9, **caractérisé en ce que** l'ouverture (125) peut être recouverte par une couverture (140), dans lequel la couverture (140) est réalisée en particulier sous forme d'indicateur de l'état d'étanchéité de l'accumulateur de pression (11).

11. Accumulateur de pression doté d'un dispositif de liaison selon l'une quelconque des revendications précédentes, **caractérisé en ce que** l'accumulateur de pression (11) présente un point de rupture (116) dans la première partie de liaison, dans lequel un limiteur de débit (113) est également disposé en particulier dans l'accumulateur de pression (11) et le point de rupture (116) est disposé par rapport au limiteur de débit (113) de telle manière que le limiteur de débit (113) reste dans l'accumulateur de pression (11) en cas de rupture au point de rupture (116).

12. Accumulateur de pression doté d'un dispositif de liaison selon l'une quelconque des revendications précédentes, **caractérisé en ce que** l'accumulateur de pression (11) présente une seconde partie de liaison, qui est conçue pour une liaison fluidique avec le dispositif de liaison (31), dans lequel la seconde partie de liaison est construite en particulier de la même manière que la première partie de liaison.

13. Accumulateur de pression doté d'un dispositif de liaison selon la revendication 2 et la revendication 12, dans lequel lesdits au moins deux accumulateurs de pression (11) et le dispositif de liaison (31) forment un agencement d'accumulateurs de pression, dans lequel lesdits au moins deux accumulateurs de pression (11) sont fluidiquement reliés respectivement à la première et à la seconde partie de liaison avec le dispositif de liaison (31) par le dispositif de liaison (31).

14. Accumulateur de pression doté d'un dispositif de liaison selon la revendication 13, **caractérisé en ce que** les premières parties de liaison des accumulateurs de pression (11) sont reliées à un premier élément de liaison du dispositif de liaison (31) et les secondes parties de liaison des accumulateurs de pression (11) sont reliées à un deuxième élément de liaison du dispositif de liaison (31), dans lequel le premier élément de liaison et le deuxième élément de liaison sont reliés fluidiquement l'un à l'autre exclusivement par les accumulateurs de pression (11).

15. Accumulateur de pression doté d'un dispositif de liaison selon la revendication 14, **caractérisé en ce que** les éléments de liaison forment ensemble avec des accumulateurs de pression (11) de forme allongée un cadre mécaniquement stable, dans lequel les deux extrémités opposées l'une à l'autre des accumulateurs de pression (11) sont chacune reliées fluidiquement à l'élément de liaison respectif.

16. Accumulateur de pression doté d'un dispositif de liaison selon la revendication 13, **caractérisé en ce que** des points de fixation (41, 42) pour la fixation de l'agencement d'accumulateurs de pression, en particulier dans un véhicule automobile, sont formés exclusivement sur le dispositif de liaison (31).

17. Accumulateur de pression doté d'un dispositif de liaison selon la revendication 13, **caractérisé en ce que** des soupapes (23, 24) et/ou des blocs de soupapes (12, 22) et/ou des filtres et/ou des éléments d'arrêt et/ou des réducteurs de pression (21) et/ou des réducteurs de section transversale (37), en particulier une unité de soupape de remplissage (33) et/ou une unité de soupape de soutirage (34), sont disposés dans ou sur le dispositif de liaison (31).

18. Accumulateur de pression doté d'un dispositif de liaison selon l'une quelconque des revendications précédentes, **caractérisé en ce que** les accumulateurs de pression (11) sont reliés de façon inséparable au dispositif de liaison (31), de telle manière qu'une séparation d'un accumulateur de pression (11) du dispositif de liaison (31) ne soit possible que par la destruction d'un scellage et/ou à l'aide d'un outil spécial.

19. Accumulateur de pression doté d'un dispositif de liaison selon l'une quelconque des revendications précédentes, **caractérisé en ce que** le dispositif de liaison (31) est monté dans un véhicule automobile, et est conçu pour le placement des accumulateurs de pression (11).
